# DEMANDE DE BREVET EUROPEEN

(11) **EP 4 183 945 A1**
(43) Date de publication de la demande: **24.05.2023**
(21) Numéro de dépôt: 22209012.8
(22) Date de dépôt: 23.11.2022
(51) Int. Cl.: E03D 11/14, E03D 11/16, E03D 11/13, F16L 11/112, F16L 27/111

(54) **RACCORD DE PLOMBERIE POUR TOILETTES SUSPENDUES**

(30) Priorité: 23.11.2021 FR 2112371
(71) Demandeur: Vidale, Roger, 74960 Annecy (FR)
(72) Inventeur: Vidale, Roger, 74960 Annecy (FR)
(74) Mandataire: Cabinet Laurent & Charras

(57) **Abrégé**

Raccord de plomberie pour raccorder des toilettes suspendues (100) à une entrée canalisation (111) d'écoulement d'eaux usées, comprenant deux manchons (3) tubulaires et rigides, configurés pour l'un pour se raccorder à l'entrée de canalisation (111), et pour l'autre pour se raccorder à une sortie d'eau (103) des toilettes suspendues (100), caractérisé en ce qu'il comporte un ressort hélicoïdal surmoulé d'un surmoulage en matériau plastique souple formant une gaine souple et compressible reliant les manchons (3) tubulaires rigides.

## Description

La présente invention se rapporte à un raccord de plomberie, et plus spécifiquement à un raccord de plomberie pour toilettes suspendues et leur raccordement à une entrée de canalisation. Le raccord est en particulier un raccord d'écoulement d'eaux noires à l'égout.

Les toilettes suspendues sont des toilettes dans lesquelles la chasse d'eau et éventuellement le siège des toilettes sont solidaires d'une applique qui est fixée à un mur. Ces toilettes sont faciles à installer, et permettent une intégration esthétique accrue en cachant au moins partiellement les canalisations et le mécanisme de la chasse d'eau.

Les toilettes suspendues comprennent une applique murale, qui sera fixée contre le mur, dans laquelle la chasse d'eau est intégrée, et un siège ou cuvette qui est généralement suspendu à l'applique et/ou prend appui sur le sol. La chasse d'eau comporte une réserve d'eau reliée à une arrivée d'eau, et la cuvette comporte une sortie par laquelle sont évacuées l'eau de la chasse d'eau ainsi que les selles et l'urine.

Les toilettes suspendues ne nécessitent pas ou peu de travaux de maçonnerie pour leur installation, et sont en conséquence souvent installées dans un bâtiment préexistant, par exemple lors de travaux de rénovation. Les canalisations d'évacuation débouchent parfois sur une surface horizontale (sol), parfois sur une surface verticale (mur). L'angle de sortie de la canalisation peut donc varier (vertical, horizontal, incliné etc.). La distance entre la sortie d'eau du siège et l'entrée de la canalisation d'évacuation est aussi variable.

Le raccordement de la sortie des toilettes se fait usuellement par des tubes à manchons emboîtés, en plastique rigide ou en métal. Les tubes sont emboîtés au moyen de manchons prolongeant les tubes. Ces manchons s'emboîtent sur une extrémité d'un autre tube. Les tubes sont assemblés en structures raccordant la sortie des toilettes suspendues à une canalisation d'évacuation des eaux usées.

Les tubes à manchons sont fabriqués et vendus en pièces ou en kits standardisés, avec des coudes, des siphons, raccords en T ou en croix, etc. Les dimensions de ces tubes sont prédéterminées, en termes de diamètres et de longueurs, avec des incrémentations constantes. Différentes commodités telles que les douches, toilettes, baignoires etc. sont proposées à la vente en kit, avec une présélection de manchons et raccords permettant leur raccordement, et donc leur installation, dans les configurations les plus couramment rencontrées. Les toilettes suspendues sont, elles aussi, en majorité proposées à la vente et distribuées sous forme d'un kit, emballé et traité séparément.

### ETAT ANTÉRIEUR DE LA TECHNIQUE

Les documents EP 1 175 534 et EP 1 035 260 décrivent par exemple de tels kits d'installation de toilettes suspendues à tuyauterie rigide.

A l'inverse des tubes et tuyauteries de plomberie, qui sont à angles et longueurs standardisés, le raccordement de toilettes suspendues à la canalisation d'évacuation peut être d'angle et de longueur continûment variable. Il peut notamment se présenter une configuration dans laquelle les axes de la sortie de la canalisation et de la sortie de la cuvette peuvent être non-sécants, c'est à dire parallèles ou non-coplanaires. Ces configurations à axes non-sécants nécessitent notamment une solution à au moins deux coudes et trois segments de tube.

La seule opération aisée d'adaptation à une installation de manchons et tubes standardisés est la découpe d'un tube plus long avant emboîtement des manchons. La fabrication sur mesure ou bien la déformation, par exemple de tuyaux en thermoplastique avec de l'air chaud, sont des alternatives aux constructions en pièces et kits standardisé, mais représentent un coût et une complication technique conséquents.

L'espace disponible dans l'applique est en outre limité. Notamment, la profondeur, dans l'axe perpendiculaire au mur. Il n'est ainsi pas toujours possible d'utiliser des montages à coudes multiples permettant un réglage fin en position et en angle de l'extrémité de la conduite. Or le diamètre de la conduite utilisée ne peut être réduit en deçà de valeurs permettant l'évacuation des résidus solides, souvent imposées par des normes. Notamment, la longueur des manchons des tubes est généralement proportionnelle au diamètre, pour des raisons de solidité de la liaison.

Le raccordement avec deux sorties à axes non-sécants est en conséquence particulièrement compliqué dans l'espace limité de l'applique.

En conséquence, il est impossible de conditionner des toilettes suspendues avec un kit de tubes à manchons formant une structure permettant le raccordement sans connaître la configuration exacte des raccords aux canalisations du lieu d'installation, à moins de multiplier les pièces, ce qui ajoute au prix et à la complexité de la logistique de distribution.

On connaît par ailleurs des tuyaux en plastique souple, avec des parois en accordéon, ou à section longitudinale crénelée. Les replis et creux de ces tuyaux souples forment des logements annulaires dans lesquels se déposent et stagnent les eaux usées. Cette stagnation entraîne des odeurs et une usure accrue. Ces tuyaux en plastique souple présentent en conséquence une durabilité moindre, et une moindre résistance aux agressions chimiques.

Le document EP 2 900 877 décrit notamment une installation de toilettes suspendues comportant un tel tuyau souple crénelé.

Le document US 9 371 944 décrit un tuyau souple comportant un empilement de couche encapsulant un ressort entre elles. Ce tuyau est souple, présente un écoulement amélioré mais est cher à produire du fait de l'empilement de couches et le raccordement des couches multiples à des manchons aux extrémités est complexe. Le tuyau de ce document nécessite en outre une surpression pour surmonter l'effort de rétraction du tuyau exercé par le ressort et sert surtout au convoyage de liquides et poudres sous pression.

Ainsi il existe un besoin pour un raccord de plomberie pour le raccordement de toilettes suspendues à une canalisation d'évacuation qui soit facile à installer, y compris dans des configurations de raccordement complexes et non-standardisées, peu encombrant lorsqu'installé (notamment à l'intérieur d'une applique murale) et ne représentant pas un surcoût important.

### EXPOSÉ DE L'INVENTION

Afin de répondre à ce besoin, l'invention propose un raccord de plomberie pour raccorder des toilettes suspendues à une entrée de canalisation d'écoulement d'eaux usées, comprenant deux manchons tubulaires et rigides, configurés pour l'un pour se raccorder à l'entrée de canalisation, et pour l'autre pour se raccorder à une sortie d'eau des toilettes suspendues, caractérisé en ce qu'il comporte un ressort hélicoïdal surmoulé d'un surmoulage en matériau plastique souple formant une gaine souple et compressible reliant les manchons tubulaires rigides.

Le raccord selon l'invention présente notamment une solidité et une déformabilité suffisante pour son utilisation avec des toilettes suspendues. Sa déformabilité lui permet notamment d'être variable en longueur, en angle de raccordement et notamment lors d'une configuration non-coplanaire des axes des sorties de la canalisation et de la cuvette.

Les replis permettant sa compression sont en outre en spirale, et débouchent longitudinalement, ce qui réduit la stagnation d'eaux usées

Le raccord peut en outre présenter une ou plusieurs des caractéristiques suivantes.

La gaine peut comporter une structure en soufflet à replis en spirale, le ressort hélicoïdal passant par un sommet d'un repli en spirale.

Les manchons et le surmoulage peuvent être réalisés en matériau plastique tel que le PVC, le polyéthylène, le polypropylène ou le polyuréthane.

Le surmoulage et les manchons tubulaires rigides peuvent être réalisés dans un même matériau et venir de matière.

Le raccord peut présenter une longueur en extension maximale de 25 à 35 cm et une longueur en compression maximale de 15 à 25 cm.

Le nombre de spires du ressort hélicoïdal est avantageusement compris entre 10 et 20.

Une portion d'une spire du ressort hélicoïdal peut être surmoulée dans un des manchons du raccord.

Le raccord peut présenter deux ressorts hélicoïdaux surmoulés dans la gaine et les deux ressorts hélicoïdaux être de diamètre différent et disposés concentriques lors du surmoulage, le ressort de grand diamètre étant surmoulé dans les plis extérieurs et le ressort de petit diamètre étant surmoulé dans les plis intérieurs de la gaine,

Le raccord peut présenter deux ressorts hélicoïdaux surmoulés dans la gaine et les deux ressorts être de diamètre identique, et enroulés l'un dans l'autre, avec un déphasage d'une fraction de tour, typiquement un demi-tour.

L'invention se rapporte aussi au procédé de fabrication d'un raccord de plomberie tel que précédemment décrit, caractérisé en ce qu'il comporte les étapes :
- Insertion d'un ressort hélicoïdal dans un logement en spirale d'un moule,
- Surmoulage du ressort hélicoïdal au moyen d'un matériau plastique déformable de façon à générer une gaine souple et compressible,
- Fixation de la gaine à deux manchons tubulaires rigides de façon à générer le raccord.

L'étape de fixation de la gaine à deux manchons peut notamment comporter une sous-étape de collage aux manchons de la gaine, en particulier au moyen d'une colle de type néoprène.

L'étape de fixation de la gaine à deux manchons peut en alternative comporter une sous-étape de soudure de la gaine aux manchons.

Les étapes de surmoulage du ressort hélicoïdal et de fixation de la gaine à deux manchons peuvent être confondues en une étape dans laquelle le matériau plastique déformable est injecté dans un moule continu formant à l'injection la gaine et les manchons, qui viennent alors de matière.

Enfin, l'invention se rapporte à un kit d'installation de toilettes suspendues, comprenant :
- une cuvette présentant une sortie d'eau, configurée pour être raccordée à un mécanisme de chasse d'eau,
- un mécanisme de chasse d'eau,
- une applique, configurée pour être, à l'installation, solidaire d'une part d'un mur et d'autre part de la cuvette, et pour contenir le mécanisme de chasse d'eau,
et un raccord de plomberie tel que précédemment décrit, configuré pour raccorder la sortie d'eau de la cuvette à une entrée de canalisation.

### BRÈVE DESCRIPTION DES FIGURES

D'autres caractéristiques et avantages apparaîtront à la lecture de la description des figures ci-après, parmi lesquelles :
La figure 1 est une vue en perspective schématique d'un raccord de plomberie selon l'invention, en extension,
La figure 2 est une vue en perspective schématique du raccord de plomberie de la figure 1, en compression,
La figure 3 est une vue en coupe partielle de la gaine souple du raccord des figures 1 et 2,
La figure 4 est une vue en coupe partielle de la gaine soupe d'un mode de réalisation alternatif,
Les figures 5, 6, 7 et 8 sont des vues de côté d'un raccord selon un mode de réalisation de l'invention,
Les figures 9, 10 et 11 sont des vues en coupe de toilettes suspendues raccordées à différentes configurations de canalisations, au moyen de raccords tels que représentés en figures 6, 7 et 8,
La figure 12 est une représentation schématique d'un kit d'installation de toilettes suspendues selon l'invention,
La figure 13 est un organigramme reprenant schématiquement les principales étapes du procédé de fabrication d'un raccord selon l'invention,
Les figures 14, 15, 16 et 17 illustrent des étapes d'un mode de réalisation du procédé de la figure 12,
La figure 18 illustre un mode de réalisation particulier de raccord,
La figure 19 illustre un mode de réalisation alternatif de raccord.

### DESCRIPTION DÉTAILLÉE DE L'INVENTION

Les différents modes de réalisation représentés sont donnés à titre illustratif et non limitatif. De nombreuses caractéristiques de différents modes de réalisations peuvent être combinés ou présenter des variations mineures sans dévier du concept de l'invention.

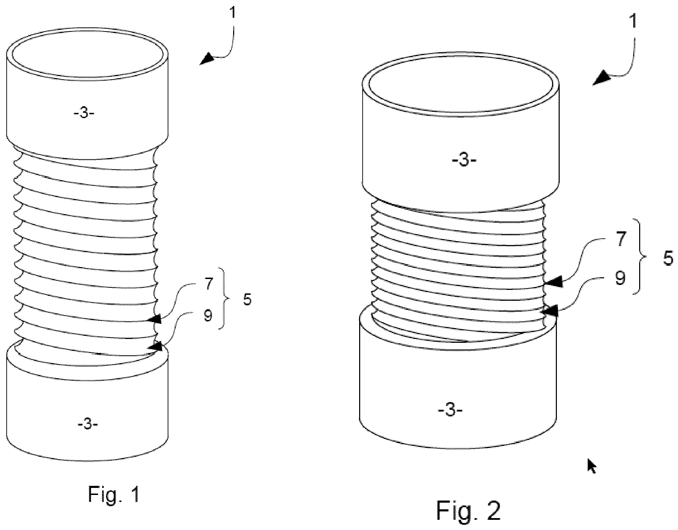

La figure 1 est une vue en perspective schématique d'un raccord 1 de plomberie, en particulier pour une installation de type toilettes suspendues.

Le raccord 1 comporte deux manchons 3, de forme tubulaire droite, avec un diamètre prédéterminé, correspondant pour l'un des manchons 3 au diamètre d'une sortie de cuvette de toilette suspendue, et pour l'autre manchon 3 au diamètre d'une canalisation à laquelle les toilettes suspendues doivent être raccordées.

Les deux manchons 3 tubulaires ont une longueur de 3 à 10cm. En particulier, leur diamètre est ici le même pour les deux manchons 3, et correspond par exemple à un diamètre standard : 60, 80 ou 100mm.

Selon d'autres modes de réalisation non-représentés, les manchons 3 peuvent être différents, l'un plus gros en diamètre et plus long. Le raccord 1 forme alors un adaptateur.

Les deux manchons 3 sont reliés par une gaine 5 souple. La gaine 5 est en particulier composée d'un ressort hélicoïdal 7, notamment métallique, surmoulé d'un surmoulage 9 en matière plastique, d'une épaisseur suffisamment réduite pour être souple. Le ressort hélicoïdal 7 est avantageusement en acier de type acier ressort inoxydable, contenant une portion de silice assurant l'élasticité, et du chrome pour la passivation.

Le diamètre du fil du ressort hélicoïdal 5 est en particulier inférieur à 3mm, préférentiellement à 2mm. Le nombre de spires du ressort hélicoïdal 5 est compris entre 10 et 20, plus précisément entre 12 et 15, et typiquement 13.

La gaine 5 est alors à la fois déformable et compressible. Le matériau du surmoulage 9 de la gaine 5 est par exemple le PVC, le polyéthylène, le polypropylène ou le polyuréthane. En particulier, les manchons 3 et le surmoulage 9 de la gaine 5 peuvent être identiques, et les manchons 3 et le surmoulage 9 peuvent alors venir de matière.

La gaine 5 est donc composée uniquement d'un ressort 7 et d'une épaisseur de matériau polymère entourant le ressort 7 surmoulé. Les manchons 3 peuvent notamment venir de matière avec la gaine 5, et le raccord 1 ainsi obtenu est particulièrement aisé à produire. Le ressort 7 étant surmoulé, il est en outre à l'abri de l'humidité et de l'atmosphère et donc de l'oxydation.

Le surmoulage 9 du ressort 7 entoure ici la totalité dudit ressort 7. Notamment, le surmoulage 9 forme aussi la paroi de la gaine 5 du raccord 1. Aucune couche supplémentaire, aucun tube séparé ou élément additionnel n'est utilisé pour former la gaine 5 du raccord 1.

La gaine 5 du raccord 1 de la figure 1 est en extension. Les spires du ressort hélicoïdal 7 sont écartées, et ledit ressort hélicoïdal 7 est déformé en extension. La longueur du raccord 1 dans cet état, son extension maximale, est d'environ 25 à 35cm.

En figure 2, la gaine 5 est montrée en compression. Les spires du ressort hélicoïdal 7 sont rapprochées, et ledit ressort hélicoïdal 7 est déformé en compression. La longueur du raccord 1 dans cet état, sa compression maximale, est d'environ 15 à 25 cm.

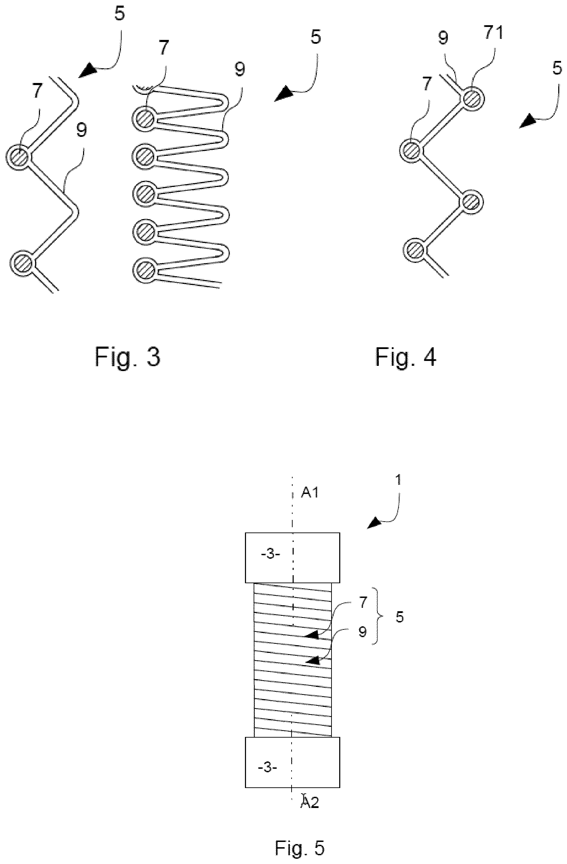

La figure 3 montre en coupe une portion de gaine 5, avec les spires du ressort hélicoïdal 7, à gauche en figure 3 la gaine 5 est en extension (comme en figure 1), et à droite en figure 3 la gaine 5 est en compression (comme en figure 2).

La gaine 5 présente une forme générale en soufflet, avec des replis hélicoïdaux, le ressort hélicoïdal 7 passant par le sommet, en particulier le sommet extérieur, des replis. En extension, les spires du ressort hélicoïdal 7 sont écartées, et les replis sont relativement ouverts. En compression, les spires du ressort hélicoïdal 7 sont rapprochées et les replis sont relativement fermés.

Les replis hélicoïdaux correspondant aux spires du ressort hélicoïdal 7, dont ils suivent le tracé, forment des gouttières hélicoïdales débouchant à leurs deux extrémités. Ces gouttières débouchent à leurs extrémités axiales, permettent un écoulement efficace de l'eau et des résidus solides qui s'écoulent par le raccord 1.

La combinaison du ressort hélicoïdal 7 avec le surmoulage 9 formant une membrane entre les spires du ressort hélicoïdal 7 permet d'obtenir une structure déformable et compressible, qui offre une grande variété de configurations. Le ressort hélicoïdal 7 surmoulé est aussi préservé de l'oxydation par le surmoulage 9.

Le ressort hélicoïdal 7 permet d'améliorer la résistance aux contraintes et aux déchirures, renforçant ainsi le surmoulage en matériau plastique souple étanche. La structure en soufflet à replis hélicoïdaux permet de diminuer les contraintes, notamment en compression de la gaine 5.

En étant placé au sommet replis de la structure, le ressort hélicoïdal 7 permet en outre de rigidifier les replis hélicoïdaux, et donc la durabilité de cette structure à replis, ce qui assure un bon écoulement par les gouttières ainsi formées et une durabilité élevée dans le temps.

La figure 4 montre un mode de réalisation de gaine 5 en coupe. Le raccord 1 de la figure 4 comporte deux ressorts hélicoïdaux 7, 71 de diamètre différent. Le ressort de grand diamètre 7 est disposé autour du ressort de petit diamètre 71, de façon concentrique, leurs axes de révolution superposés. Le ressort 71 de petit diamètre passe par les sommets intérieurs des replis, et le ressort 7 de grand diamètre passe par les sommets extérieurs des replis.

L'effet de renforcement de la structure à replis hélicoïdaux est alors démultiplié.

De même, si le diamètre des manchons 3 est suffisamment grand, deux ressorts 7 de même diamètre peuvent être imbriqués avant surmoulage, avec un déphasage d'enroulement d'un demi-tour, de façon à multiplier par deux le nombre de replis et de renforcer la tenue mécanique du raccord 1.

Les figures 5 à 8 sont des vues de côté d'un raccord 1 tel que précédemment décrit, soumis à différentes déformations dans le plan de ces figures.

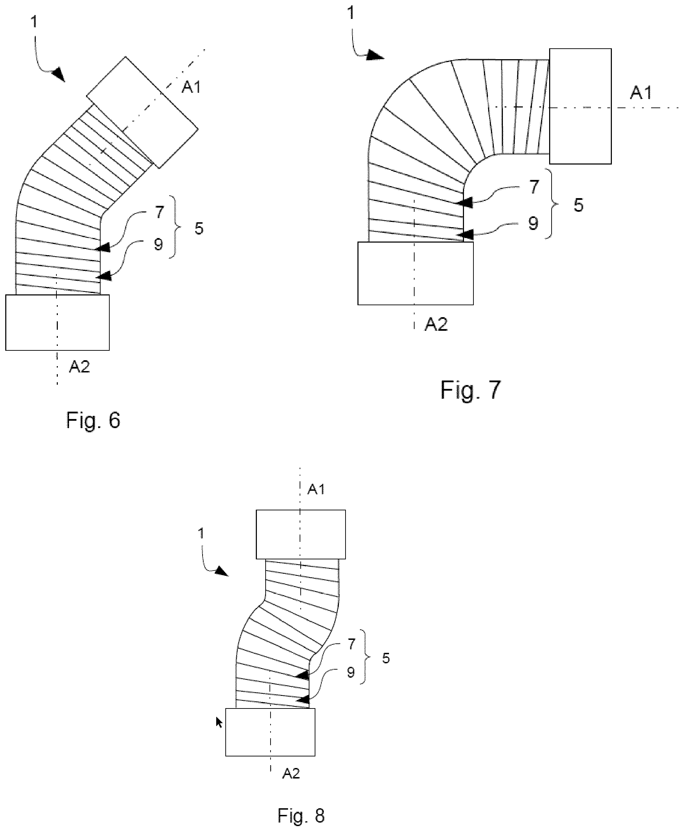

En figure 5, le raccord 1 est droit. Cette position correspond à une position de repos, correspondant à un minimum de déformation élastique. Dans cette position, les deux manchons 3 ont des axes A1, A2 de révolution alignés. Dans cette configuration, le raccord 1 remplacerait une portion de tuyau droit, pour connecter des sorties à axes alignés. Les axes A1 et A2 des manchons 3 en haut et en bas en figure 6 sont notamment confondus.

En figure 6, le raccord 1 est coudé à un angle d'environ 45°. L'axe A1 du manchon en haut en figure 6 est à un angle d'environ 45° par rapport à l'axe A2 du manchon 3 en bas en figure 6.

Le raccord 1 sert alors de coude, à 45° ici par rapport à la configuration droite de la figure 5, mais plus généralement pour des bras à angles obtus.

En figure 7, le raccord 1 est coudé à angle droit. L'axe A1 du manchon en haut en figure 7 est à un angle d'environ 45° par rapport à l'axe A2 du manchon 3 en bas en figure 7. Les axes A1, A2 des manchons 3 sont mutuellement à angle droit.

Le raccord 1 servirait ici à remplacer un coude rigide à angle droit. Des coudes à angle aigu, bien que peu utilisés en plomberie, peuvent aussi être obtenus.

En figure 8, le raccord 1 est désaxé. Les axes A1 et A2 des deux manchons 3 sont parallèles mais non-confondus.

Dans cette configuration, le raccord 1 peut raccorder des tuyaux décalés. Il remplace une structure en « Z » à deux coudes et trois segments, en une seule pièce et avec une compacité accrue.

Les déformations des configurations « désaxé » et « coudé » peuvent être combinées. De même, une configuration en coude peut être compressée ou étirée.

Un grand nombre de configurations est alors accessible avec le seul raccord 1 selon l'invention. Le raccord 1 est en outre continûment déformable : des gammes continues d'angles et de longueurs sont accessible, plus seulement des valeurs prédéterminées en ensemble discret.

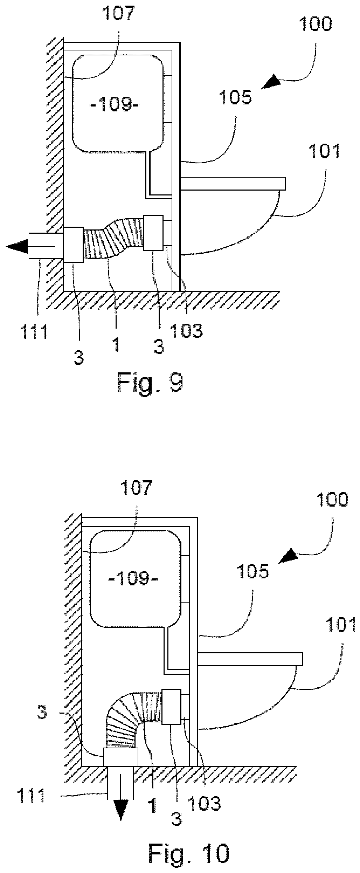

Les figures 9 à 11 représentent des installations de toilettes suspendues 100, dans lesquelles les raccords 1 des figures 6, 7 et 8 sont utilisés.

Les toilettes suspendues 100 comportent une cuvette 101, présentant une sortie d'eau 103. La cuvette 101, à l'état installé, est portée par une applique 105, qui est, à l'état installé, attachée à un mur 107 du bâtiment dans lequel les toilettes suspendues 100 sont installées.

L'applique 105 comporte par exemple un cadre et un revêtement, formant ainsi un ensemble parallélépipédique, duquel dépasse la cuvette 101 à l'avant. L'applique 105 abrite notamment à l'état installé, un mécanisme de chasse d'eau 109, raccordé à la cuvette 101 pour permettre l'évacuation des selles et de l'urine par actionnement du mécanisme de chasse d'eau 109.

La sortie d'eau 103 de la cuvette 101 est à relier à une entrée de canalisation 111, typiquement une entrée de canalisation 111 reliée aux égouts ou à une fosse septique pour l'évacuation des eaux usées. L'entrée de canalisation 111 se présente notamment sous la forme d'un tube intégré dans un mur ou un sol. Ces tubes sont généralement placés lors des travaux de maçonnerie, et ne peuvent être modifiés sans travaux difficiles et coûteux.

Le raccordement des toilettes suspendues 100 est effectué en enfilant un manchon 3 d'un raccord 1 sur ou dans la sortie d'eau 103 de la cuvette 101, et l'autre manchon 3 dudit raccord 1 sur ou dans l'entrée de canalisation 111.

La cuvette 101 des figures 9 à 11 présente une sortie d'eau 103 à axe horizontal. D'autres modes de réalisation peuvent bien sûr être réalisés en modifiant cet axe.

En figure 9, l'entrée de canalisation 111 débouche dans un mur 107, avec un axe horizontal, donc parallèle à celui de la sortie d'eau 103, mais décalé.

Le raccord 1 utilisé est ici déformé comme en figure 8, il est désaxé. Ses deux manchons 3 sont parallèles, mais avec des axes décalés.

En figure 10, l'entrée de canalisation 111 débouche dans le sol, près du mur 107, avec un axe vertical. Les axes de la sortie d'eau 103 de la cuvette 101 et l'axe de l'entrée de canalisation 111 sont donc en coude à angle droit.

Le raccord 1 utilisé est ici déformé comme en figure 7, il est à angle droit.

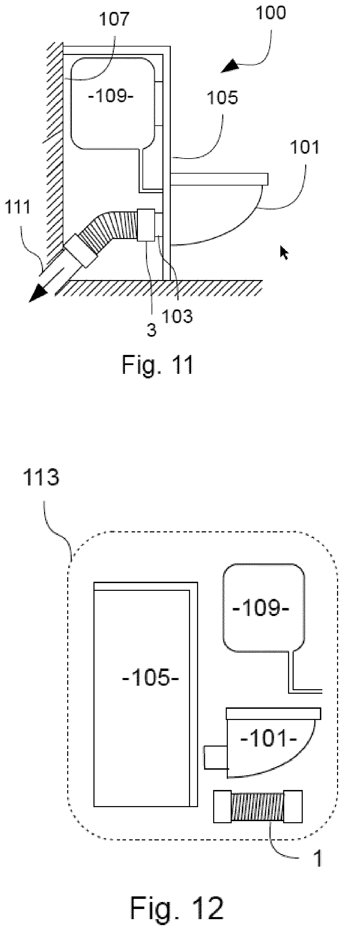

En figure 11, l'entrée de canalisation 111 débouche à l'angle entre le sol et le mur 107, avec un axe incliné à 45°. Les axes de la sortie d'eau 103 de la cuvette 101 et l'axe de l'entrée de canalisation 111 sont donc en coude à 45°.

Le raccord 1 utilisé est ici déformé comme en figure 8, il est en coude à angle à 45°.

La figure 12 illustre un kit 113 pour l'installation de toilettes suspendues 100. Le kit 113 comporte les composants précédemment décrits des toilettes suspendues 100 : cuvette 101, applique 105, mécanisme de chasse d'eau 109, et éventuellement un ensemble de moyens de fixation entre eux des composants et de l'applique 105 au mur 107.

Le kit 113 comporte en outre au moins un raccord 1, tel que décrit précédemment. Plus avant, le kit 113 peut comporter plusieurs raccords 1, avec différentes longueurs, diamètres etc. pour une plus grande adaptabilité.

Chacun des raccords 1 remplace dans ce kit 113 nombre potentiellement important de tubes et coudes rigides à manchons. Dès lors, les kits 113 peuvent être conditionnés, transportés et vendus avec les raccords 1. Ces raccords 1, uniques ou en nombre réduit, sont légers, faciles à emballer et peu volumineux, notamment par rapport aux ensembles de tuyauterie rigide qu'il faudrait inclure pour couvrir toutes les configurations accessibles avec le raccord 1 selon l'invention.

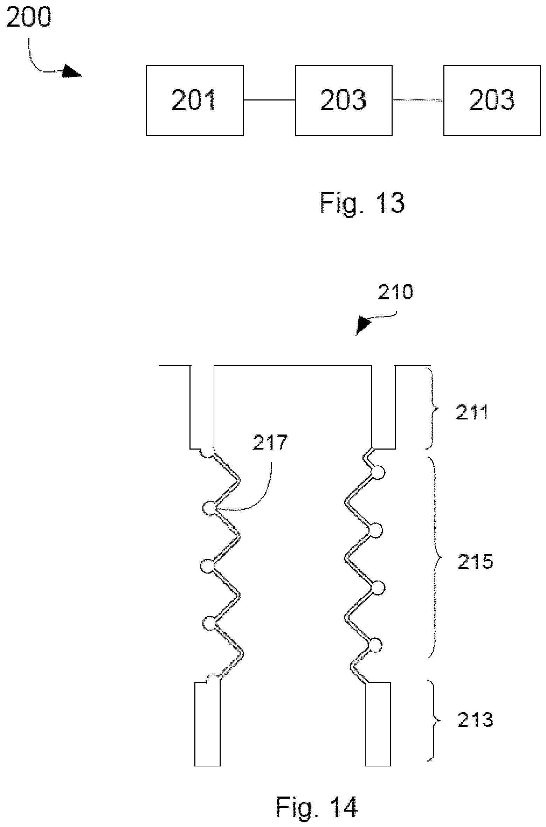

La figure 13 est un organigramme linéaire, illustrant le procédé 200 de fabrication d'un raccord 1 selon l'invention. Les figures 14 à 17 illustrent les principales étapes dudit procédé 200.

La première étape 201 est l'insertion d'un ressort hélicoïdal 7 dans un moule 210. Le moule 210 est représenté vide en figure 14. Il comporte deux portions extrémales 211, 213, une portion centrale en soufflet 215, à replis en spirale et suffisamment fine pour que le matériau moulé reste souple, et un logement en spirale 217 situé au sommet des replis en spirale de la portion centrale en soufflet 215.

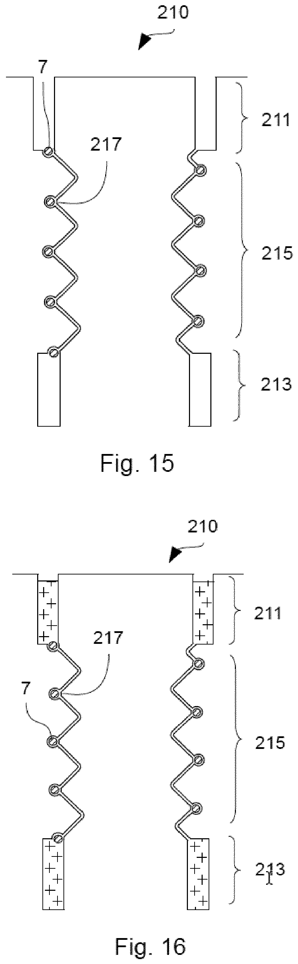

Le ressort hélicoïdal 7 est absent en figure 14, et inséré dans le logement en spirale 217 en figure 15.

La deuxième étape 203 est le surmoulage du ressort hélicoïdal 7 au moyen d'un matériau plastique, injecté dans le moule 210, notamment au niveau de sa portion centrale en soufflet 215, dans les replis en spirale. Cette étape génère la gaine 5 souple et compressible.

La troisième étape 205 est la fixation de la gaine 5 ainsi obtenue à deux manchons 3 tubulaires rigides.

Ces deux étapes 203, 205 sont réalisées en une seule étape de moulage par injection dans le mode de réalisation des figures 14 à 17.

L'injection du matériau plastique dans le moule 210 est représentée en figure 16. Le matériau plastique, injecté à l'état fluide, remplit les portions extrémales 211, 213 correspondant aux manchons 3. Les portions extrémales 211, 213 sont ici tubulaires, avec une épaisseur suffisante pour que les manchons 3 obtenus soient rigides.

Le matériau plastique remplit aussi la portion centrale en soufflet 215, en surmoulant le ressort hélicoïdal situé dans le logement en spirale 217, formant ainsi lors de la même étape de moulage les manchons 3 et la gaine 5 qui viennent de matière.

Les étapes 203, 205 de surmoulage du ressort hélicoïdal 7 et de liaison de la gaine 5 aux deux manchons 3 sont confondues en une seule étape dans laquelle le matériau plastique déformable est injecté dans le moule 201 continu formant à l'injection la gaine 5 et les manchons 3, qui viennent alors de matière.

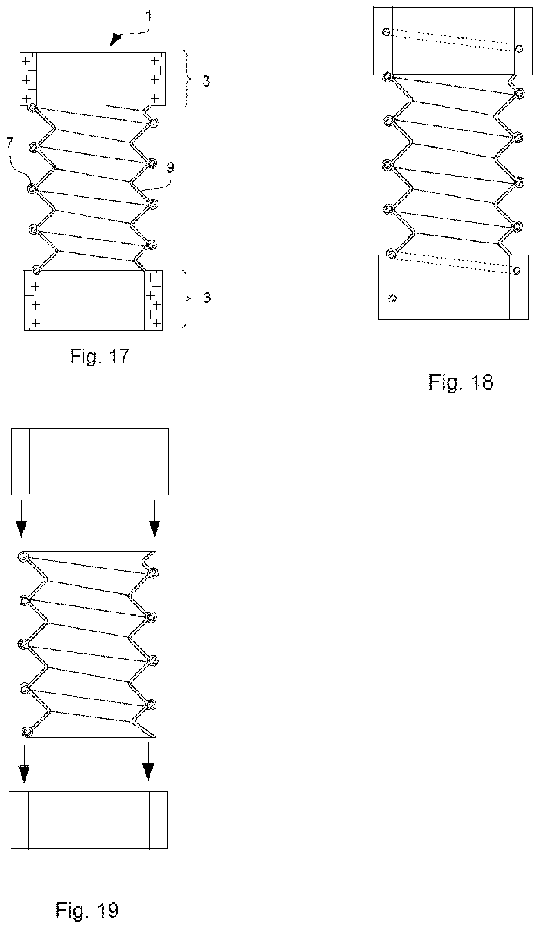

Le raccord 1 obtenu lors du démoulage est représenté en figure 17. Il présente deux manchons 3, reliés par une gaine 5 en soufflet, avec un ressort hélicoïdal 7 et un surmoulage 9 en matériau plastique. La gaine 5 est suffisamment fine pour être déformable élastiquement en même temps que le ressort hélicoïdal 7, et les manchons 3 sont suffisamment épais pour être rigides.

La figure 18 montre un mode de réalisation alternatif de raccord 1, obtenu par moulage dans un moule 210 semblable à celui des figures 14 à 17. Dans ce mode de réalisation, le ressort hélicoïdal 7 se prolonge dans les manchons 3, dans lesquels il est aussi surmoulé.

Notamment, chaque manchon 3 comporte avantageusement au moins une spire du ressort hélicoïdal 7 surmoulée dans sa matière.

La solidité et la résistance, surtout en traction, du raccord 1 sont alors renforcées, la portion de ressort hélicoïdal 7 surmoulée dans chaque manchon 3 formant un renfort mécanique.

La figure 19 montre un mode de réalisation alternatif de raccord 1, en cours d'assemblage. Dans le mode de réalisation représenté, les manchons 3 sont réalisés séparément de la gaine 5.

La gaine 5 est ici attachée, en étant collée, soudée ou fixée lors de la troisième étape 205 aux manchons 3, par exemple au moyen d'une colle de type néoprène, d'une soudure thermique ou à ultrasons, d'éléments à coopération de forme etc.

L'étape de fixation 205 de la gaine 5 aux manchons 3 comporte alors respectivement une sous-étape de collage ou de soudure de la gaine 5 aux manchons 3.

En réalisant séparément la gaine 5 et les manchons 3, il est possible de les produire continûment, puis de les découper longitudinalement à la bonne longueur. La gaine 5 et les manchons 3 peuvent alors être réalisés par extrusion continue, comme les tubes plastiques souples et rigides connus.

Le raccord 1 selon l'invention permet de résoudre simplement et dans la plupart des configurations le problème du raccordement des toilettes suspendues 100 à une entrée de canalisation 111. Le raccord 1 est en outre de fabrication aisée, et peu coûteuse. Ce raccord 1 est en outre compact, et peut aisément être intégré, expédié et vendu dans un kit 113 d'installation de toilettes suspendues 100.

## Revendications

1. Raccord de plomberie pour raccorder des toilettes suspendues (100) à une entrée canalisation (111) d'écoulement d'eaux usées, comprenant deux manchons (3) tubulaires et rigides, configurés pour l'un pour se raccorder à l'entrée de canalisation (111), et pour l'autre pour se raccorder à une sortie d'eau (103) des toilettes suspendues (100), **caractérisé en ce qu'**il comporte un ressort hélicoïdal (7) surmoulé d'un surmoulage (9) en matériau plastique souple formant une gaine (5) souple et compressible reliant les manchons (3) tubulaires rigides.

2. Raccord de plomberie selon la revendication 1, **caractérisé en ce que** la gaine (3) comporte une structure en soufflet à replis en spirale, le ressort hélicoïdal (7) passant par un sommet d'un repli en spirale.

3. Raccord de plomberie selon la revendication 1 ou 2, **caractérisé en ce que** les manchons (3) et le surmoulage (9) sont réalisés en matériau plastique tel que le PVC, le polyéthylène, le polypropylène ou le polyuréthane.

4. Raccord de plomberie selon l'une des revendications 1 à 3, **caractérisé en ce que** le surmoulage (9) et les manchons (3) tubulaires rigides sont réalisés dans un même matériau et viennent de matière.

5. Raccord de plomberie selon l'une des revendications précédentes, **caractérisé en ce qu'**il présente une longueur en extension maximale de 25 à 35 cm et une longueur en compression maximale de 15 à 25 cm.

6. Raccord de plomberies selon l'une des revendications précédentes, **caractérisé en ce que** le nombre de spires du ressort hélicoïdal (7) est compris entre 10 et 20.

7. Procédé de fabrication d'un raccord de plomberie (1) selon l'une des revendications précédentes, **caractérisé en ce qu'**il comporte les étapes :
- Insertion (201) d'un ressort hélicoïdal (7) dans un logement en spirale d'un moule (210),
- Surmoulage (203) du ressort hélicoïdal (7) au moyen d'un matériau plastique déformable de façon à générer une gaine (5) souple et compressible,
- Fixation (205) de la gaine (5) à deux manchons (3) tubulaires rigides de façon à générer le raccord (1).

8. Procédé de fabrication de raccord de plomberie selon la revendication précédente **caractérisé en ce que** l'étape de fixation (205) de la gaine (5) à deux manchons (3) comporte une sous-étape de collage aux manchons (3) de la gaine (5), en particulier au moyen d'une colle de type néoprène.

9. Procédé de fabrication de raccord de plomberie selon la revendication 7, **caractérisé en ce que** l'étape de fixation (205) de la gaine (5) à deux manchons (3) comporte une sous-étape de soudure de la gaine (5) aux manchons (3).

10. Procédé de fabrication d'un raccord de plomberie selon la revendication 7, **caractérisé en ce que** les étapes de surmoulage (203) du ressort hélicoïdal (7) et de fixation (205) de la gaine (5) à deux manchons (3) sont confondues en une étape dans laquelle le matériau plastique déformable est injecté dans un moule (201) continu formant à l'injection la gaine (5) et les manchons (3), qui viennent alors de matière.

11. Kit d'installation de toilettes suspendues (100), comprenant :
- une cuvette (101) présentant une sortie d'eau (103), configurée pour être raccordée à un mécanisme de chasse d'eau (109),
- un mécanisme de chasse d'eau (109), - une applique (105), configurée pour être, à l'installation, solidaire d'une part d'un mur (107) et d'autre part de la cuvette (101), et pour contenir le mécanisme de chasse d'eau (109),
**caractérisé en ce qu'**il comporte en outre un raccord de plomberie (1) selon l'une des revendications 1 à 6, configuré pour raccorder la sortie d'eau (103) de la cuvette (101) à une entrée de canalisation (111).
